# FASCICULE DE BREVET EUROPEEN

(11) **EP 1 590 216 B1**
(45) Date de publication et mention de la délivrance du brevet: **03.12.2008**
(21) Numéro de dépôt: 04708789.5
(22) Date de dépôt: 06.02.2004
(51) Int. Cl.: B60T 7/04, B60T 7/10, B60T 13/74, B60T 13/66

(54) **PROCEDE DE GESTION DE L'ETAT ET DU FONCTIONNEMENT D'UN VEHICULE AUTOMOBILE ET SYSTEME POUR LA MISE EN OEUVRE DE CE PROCEDE**
VERFAHREN ZUR BESTIMMUNG DER ZUSTAND UND DES BETRIEBS EINES FAHRZEUG UND SYSTEM ZUR DURCHFÜHRUNG DIESES VERFAHRENS
METHOD FOR CONTROLLING THE STATE AND OPERATION OF A MOTOR VEHICLE AND SYSTEM FOR APPLICATION OF SAID METHOD

(30) Priorité: 07.02.2003 FR 0301486
(43) Date de publication de la demande: 02.11.2005
(73) Titulaire: Peugeot Citroën Automobiles SA, 78943 Vélizy-Villacoublay Cedex (FR)
(72) Inventeur: HERNETTE, Vincent, F-75014 Paris (FR); BAILLEUX, François, F-91400 Val d'Albian (FR); ABADIE, Vincent, F-78500 Sartrouville (FR)
(86) Numéro de dépôt international: PCT/FR2004/000277
(87) Numéro de publication internationale: WO 2004/071831

(56) Documents cités:
- EP-A- 0 825 081
- WO-A-99/65746
- DE-A- 19 831 541
- DE-A- 19 838 886
- DE-A- 19 935 999

## Description

La présente invention concerne un procédé de gestion de l'état et du fonctionnement d'un véhicule automobile, ainsi que le système pour la mise en oeuvre de ce procédé. Un tel systeme est montré dans le document WO99/65746

On assiste actuellement à une automatisation croissante des véhicules automobiles dans le but d'augmenter la sécurité et le confort de ceux-ci.

Ainsi, le levier de frein à main exigeant un effort musculaire de la part du conducteur pour immobiliser à l'arrêt le véhicule est maintenant remplacé par un dispositif de freinage statique du véhicule commandé par le conducteur en actionnant un élément de commande, tel qu'un interrupteur, situé par exemple au tableau de bord du véhicule.

En outre, la décélération longitudinale du véhicule peut être assurée par ce dispositif de freinage statique avec utilisation du dispositif d'antiblocage traditionnel des roues du véhicule agissant également sur les étriers de frein, en surveillant la vitesse des roues du véhicule lorsque ce dernier se déplace sur une route à faible adhérence.

Ces architectures connues sont très onéreuses du fait que le tire-câble utilisé dans le dispositif de freinage statique doit avoir une bonne dynamique et par conséquent une puissance moteur capable de générer les efforts dans le câble en moins de 500 ms.

La présente invention a pour but d'éliminer les inconvénients ci-dessus des systèmes connus.

A cet effet, l'invention propose un procédé de gestion de l'état et du fonctionnement d'un véhicule automobile comprenant un dispositif de freinage statique pouvant être activé par un élément de commande actionnable manuellement à l'arrêt du véhicule, tel qu'un interrupteur, et un dispositif de freinage dynamique, et qui est caractérisé en ce qu'une action manuelle sur l'élément de commande pendant que le véhicule roule provoque une opération de freinage du véhicule par activation du dispositif de freinage dynamique pour décélérer le véhicule à condition que la pédale d'accélération soit relâchée par le conducteur du véhicule.

Une action manuelle fugitive sur l'élément de commande provoquant l'activation du dispositif de freinage dynamique conduit ce dernier à fournir une pression de freinage du véhicule correspondant à une décélération du véhicule relativement faible, par exemple d'environ 2 m/s².

En outre, une action manuelle prolongée sur l'élément de commande provoquant l'activation du dispositif de freinage dynamique conduit ce dernier à fournir une pression de freinage du véhicule correspondant à une décélération relativement forte du véhicule, par exemple d'environs 6 m/s².

De préférence, les deux valeurs de décélération relativement faible et forte peuvent être programmées par le conducteur dans une gamme de valeurs comprises entre 1 m/s² et 10 m/s².

L'appui sur la pédale d'accélérateur pendant que le dispositif de freinage exerce une action de freinage commande l'annulation de cette action de freinage du véhicule.

L'appui sur la pédale de frein du véhicule à une pression de freinage supérieure à la pression de freinage exercée par le dispositif de freinage dynamique commande l'annulation de l'action de freinage de ce dispositif.

Le procédé permet de programmer une priorité à donner entre la pédale d'accélération pour autoriser ou annuler l'opération de freinage par le dispositif de freinage dynamique pendant que le véhicule roule dans des conditions de conduite normale, et l'action sur l'élément de commande manuelle pour déclencher une opération de freinage du véhicule par le dispositif de freinage dynamique même en cas d'appui sur la pédale d'accélération pendant que le véhicule roule dans des conditions de conduite accompagnée.

Le dispositif de freinage dynamique agit sur les quatre étriers de freins des roues du véhicule.

Le freinage du véhicule peut être programmé pour que le dispositif de freinage dynamique soit activé pendant que véhicule roule de manière à agir uniquement sur les étriers des roues arrière du véhicule à une pression de freinage permettant de bloquer les roues arrière en réponse à la réalisation d'une condition imposée par le conducteur et consistant, par exemple, à appuyer simultanément sur trois interrupteurs différents accessibles au conducteur.

Le mode de freinage de blocage des roues arrière du véhicule peut être indiqué par clignotement du témoin lumineux de frein de parking existant dans la planche de bord du véhicule.

Le procédé permet également de mettre en service le dispositif d'antiblocage des roues du véhicule lors d'une activation du dispositif de freinage dynamique pendant que le véhicule roule sur une route de faible adhérence.

Les feux de stop arrière du véhicule sont allumés en cas de freinage du véhicule par le dispositif de freinage dynamique.

L'invention propose également un système de gestion de l'état et du fonctionnement d'un véhicule automobile pour la mise en oeuvre du procédé tel que défini précédemment, et qui est caractérisé en ce qu'il comprend un dispositif de pilotage des dispositifs de freinage statique et dynamique, recevant des informations de différents capteurs et interrupteurs présents dans le véhicule, tels que l'interrupteur de commande de mise en service du dispositif de freinage statique à l'arrêt du véhicule, ainsi que des pédales d'accélération et de frein du véhicule, le dispositif de pilotage permettant de commander le dispositif de freinage dynamique pour freiner le véhicule dès détection des conditions selon lesquelles l'interrupteur de commande du dispositif de freinage statique a été actionné manuellement et la pédale d'accélération a été relâchée.

Le dispositif de freinage statique comprend un moto-réducteur électrique entraînant au moins un câble d'actionnement d'un frein de parking agissant sur les roues arrière du véhicule et le dispositif de freinage dynamique comprend une pompe électro-hydraulique, au moins deux récepteurs de frein hydraulique, et des moyens de commande actionnant sélectivement la pompe pour alimenter en liquide de frein sous pression les récepteurs de frein hydraulique.

L'invention sera mieux comprise, et d'autres buts, caractéristiques, détails et avantages de celle-ci apparaîtront plus clairement dans la description explicative qui va suivre faite en référence aux dessins schématiques annexés donnés uniquement à titre d'exemple illustrant un mode de réalisation de l'invention et dans desquels :
- la figure 1 est un schéma illustrant des composants d'un véhicule automobile auquel peut s'appliquer le procédé de l'invention ; et
- la figure 2 représente sous forme de schéma-blocs l'architecture du système de l'invention permettant de gérer l'état et le fonctionnement d'un véhicule automobile doté d'un dispositif de freinage dynamique et d'un dispositif de freinage statique.

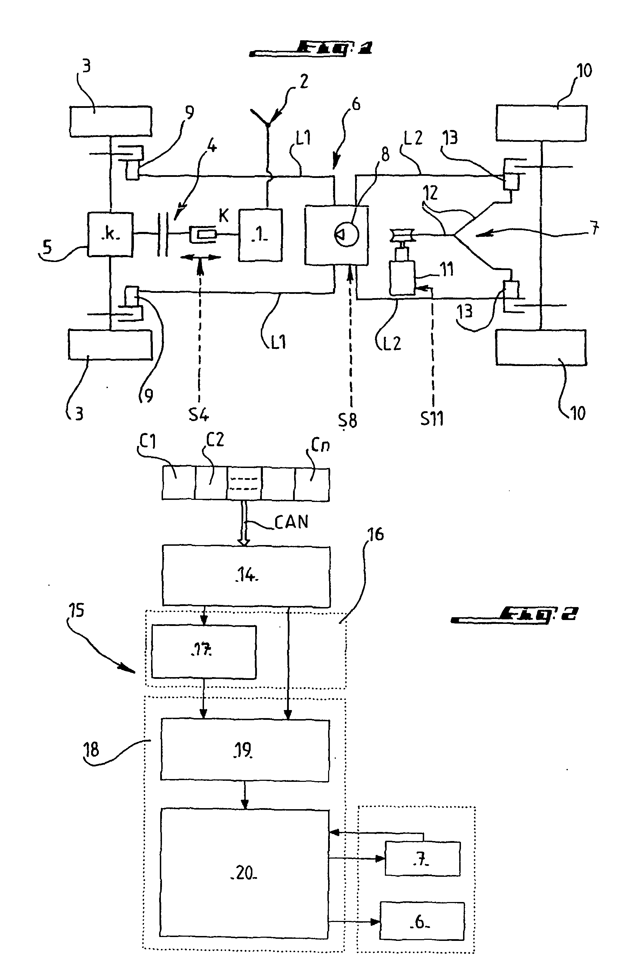

Le véhicule automobile tel que représenté en figure 1 est équipé d'un moteur 1 commandé par une pédale d'accélérateur 2.

Le moteur 1 développe un couple moteur K dont l'intégralité ou dont une fraction k peut être transmis aux roues motrices 3 par l'intermédiaire d'un embrayage 4 et d'un système de transmission 5, l'embrayage 4 pouvant être constitué par un embrayage piloté de façon automatique par un signal S4.

Le procédé et le système de l'invention s'appliquent à un véhicule équipé d'un dispositif de freinage dynamique 6 et d'un dispositif de freinage statique 7, chacun de ces dispositifs pouvant être commandé par une source d'énergie indépendante de l'énergie musculaire du conducteur.

De préférence, le dispositif de freinage dynamique 6 comprend une pompe électro-hydraulique 8 commandée par un signal S8 et susceptible d'alimenter en liquide de frein sous pression des récepteurs 9 (étriers) de frein hydraulique associés respectivement aux roues motrices avant 3 et aux roues arrière 10, les liaisons de la pompe 8 aux récepteurs de frein hydraulique 9 et 13 associés aux roues motrices 3 et arrière 10 étant représentées en L1 et L2. Les électrovannes reliant la pompe 8 aux récepteurs 9 de frein hydraulique et formant un modulateur hydraulique connu ne sont pas représentées pour des raisons de simplicité.

Le dispositif de freinage statique 7 comprend un moto-réducteur électrique 11 commandé par un signal S11 et pouvant entraîner au moins un câble 12 propre à actionner un frein de parking 13 agissant sur les roues arrière 10 du véhicule.

Selon l'invention, le système de gestion de l'état et du fonctionnement du véhicule comprend de manière générale, comme représenté en figure 2, une pluralité de capteurs C1, C2, ..., Cn qui sont embarqués sur le véhicule et qui permettent de mesurer des variables pouvant intervenir dans la dynamique de fonctionnement du véhicule et d'estimer, par calcul, d'autres variables non directement mesurées.

A titre d'exemple, les capteurs utilisés peuvent comprendre un capteur d'accélération ou de décélération longitudinale du véhicule, des capteurs de débattement des roues 3, 10 relativement à la caisse du véhicule, des capteurs de vitesse de rotation des roues, un capteur par roue pouvant être prévu, un capteur de pression du maître-cylindre en tandem, un inclinomètre de mesure de la pente sur laquelle se déplace le véhicule, un capteur de vitesse de déplacement du véhicule, et autres.

Les différents capteurs C1 à Cn sont reliés par l'intermédiaire d'un bus multiplexé CAN à un circuit 14 d'adaptation des signaux de sortie de ces capteurs pouvant comprendre notamment des moyens de filtrage des signaux.

Le circuit d'adaptation 14 est relié à un dispositif de pilotage 15 auquel sont transmises les différentes informations provenant des différents capteurs C1 à Cn et des informations représentatives de l'état de la pédale d'accélération et de la pédale de frein du véhicule, de manière à déterminer à partir de ces informations l'état du véhicule et à calculer les consignes de freinage qui sont transmises au dispositif de freinage dynamique 6 et/ou au dispositif de freinage statique 7.

Le dispositif de pilotage 15 comprend un module de surpervision 16 à bloc électronique 17 dont les fonctions sont notamment d'évaluer, à partir des capteurs C1 à Cn, la situation dynamique dans laquelle se trouve le véhicule, c'est-à-dire s'il roule sur du plat, en montée ou en descente, en sens de marche avant ou de marche arrière, d'estimer la vitesse du véhicule avec précision à l'aide des capteurs de vitesse de rotation de roues de ce véhicule, et/ou d'estimer la pente sur laquelle se déplace le véhicule.

Le dispositif de pilotage 15 comprend également un contrôleur 18 dont le rôle est de déterminer l'état du véhicule à partir des informations provenant du bloc 17 ou à partir des informations provenant des capteurs C1 à Cn par l'intermédiaire du circuit d'adaptation 14, et de calculer des consignes de freinage par le bloc 20 du dispositif de pilotage 15 et qui sont transmises au dispositif de freinage piloté ou dynamique 6 et au dispositif de freinage statique 7.

Dans le but de provoquer une décélération du véhicule, le dispositif de pilotage 15 est programmé pour effectuer une opération de freinage du véhicule en transmettant un ordre d'activation du dispositif de freinage dynamique 6 après avoir exercé manuellement une pression sur l'interrupteur de commande du dispositif de freinage statique 7 et à condition que le dispositif de pilotage 15 ait détecté la position de relâchement par le conducteur de véhicule de la pédale d'accélération 2. Ainsi, le conducteur peut provoquer une décélération pendant que le véhicule roule et le dispositif de freinage dynamique 6 peut envoyer une pression de freinage aux quatre étriers de frein des roues du véhicule, la pression de freinage pouvant avoir une valeur comprise entre environ 25 et environ 60 bars, la pression pouvant être moindre si le sol sur lequel se déplace le véhicule a très peu d'adhérence auquel cas le dispositif d'antiblocage des roues du véhicule sera mis en service.

Avantageusement, le dispositif de pilotage 15 peut effectuer une distinction entre une pression fugitive exercée par le conducteur sur l'élément de commande et une pression prolongée sur cet élément de manière que le dispositif de freinage dynamique 6 provoque une décélération relativement faible et relativement forte suivant la pression exercée sur l'élément de commande. Par exemple, la pression fugitive sur l'élément de commande peut provoquer une décélération faible d'environ 2 m/s² à condition, bien entendu, que le conducteur ait relâché la pédale d'accélérateur 2, et une pression prolongée sur l'élément de commande provoque une plus forte décélération, d'environ 6 m/s², toujours avec priorité à la pédale d'accélérateur 2.

Pendant une action de freinage par le dispositif de freinage dynamique 6 dans les conditions indiquées ci-dessus, si le conducteur exerce à nouveau une pression sur la pédale d'accélérateur, le dispositif de pilotage 15 envoie un ordre de désactivation du dispositif de freinage dynamique pour annuler instantanément le freinage du véhicule qui peut alors repartir. Il en est de même si le conducteur exerce sur la pédale de frein une force de freinage supérieure à la force de freinage délivrée par le dispositif de freinage dynamique 6 de sorte que le conducteur peut reprendre en main son véhicule de façon habituelle.

Le conducteur du véhicule peut avantageusement programmer et mémoriser les deux valeurs de décélération relativement faible et forte dans une gamme de valeurs comprises entre, par exemple, 1 m/s² et 10 m/s². Une telle programmation peut s'effectuer à partir d'un menu affiché au tableau de bord du véhicule sur ordre du conducteur.

On notera que chaque fois que le dispositif de freinage dynamique 6 est activé, le dispositif de pilotage 15 peut commander l'allumage des feux de stop arrière du véhicule.

Il peut être utile de pouvoir programmer le dispositif de pilotage 15 de manière à donner une priorité à la pédale d'accélération 2 pour autoriser ou annuler l'opération de freinage par le dispositif de freinage dynamique comme exposé ci-dessus dans des conditions de conduite normale ou une priorité à l'action sur l'élément de commande manuelle pour déclencher une opération de freinage du véhicule par le dispositif de freinage dynamique 6 même en cas d'appui sur la pédale d'accélération 2 pendant que le véhicule roule. Cette deuxième priorité est utile dans le cas d'un jeune conducteur conduisant le véhicule sous conduite accompagnée d'un passager avant ou instructeur de manière à permettre à cet instructeur de freiner le véhicule par action manuelle sur l'élément de commande même si le jeune conducteur continue d'accélérer le véhicule par appui sur la pédale d'accélération 2. La première priorité à la pédale d'accélération 2 permet d'éviter des actions inopinées par des passagers du véhicule, tels que par exemple des enfants et, par conséquent de préserver la sécurité de fonctionnement du véhicule.

Le dispositif de pilotage 15 peut être également programmé pour que le dispositif de freinage dynamique 6 soit activé pendant que le véhicule roule de manière à agir uniquement sur les étriers des roues arrière du véhicule par une pression de freinage permettant de bloquer les roues arrière à condition que certaines conditions particulières, réalisées par le conducteur, soient respectées. Cette fonction permet de faire tourner le véhicule, par exemple d'un demi-tour, par blocage des roues arrière dans des cas extrêmes de conduite, par exemple sur une route à faible adhérence, humide ou verglacée, ou dans le cas d'une conduite à tendance sportive. Ce mode de freinage n'est donc accessible que par une action très particulière du conducteur consistant par exemple à appuyer simultanément sur trois interrupteurs différents, par exemple de manière fugitive. Les trois interrupteurs actionnables simultanément peuvent être un interrupteur lève-vitres, un interrupteur de condamnation des portes du véhicule et un interrupteur de mise hors service du dispositif de commande du dispositif de freinage dynamique. Ce mode de freinage peut être indiqué par clignotement du témoin lumineux de frein de parking existant dans la planche de bord du véhicule.

Le système de l'invention permet donc de provoquer une décélération du véhicule lors d'une action sur la commande du dispositif de freinage statique du véhicule par le conducteur à condition que ce dernier ait relâché la pédale d'accélérateur et, ensuite, le véhicule est maintenu par le freinage mécanique exercé sur les roues arrière par le dispositif de freinage statique dès lors que le véhicule est à l'arrêt, arrêt qui peut être détecté par le capteur de vitesse du véhicule.

Le dispositif de pilotage 15 peut en fait être constitué de plusieurs calculateurs électroniques dédiés aux différentes fonctions ci-dessus décrites. Il peut s'agir par exemple d'une architecture du pilotage du type à calculateur maître pilotant et coordonnant les actions de chacun des calculateurs esclaves contenant les algorithmes de commande des dispositifs de freinage dynamique et statique.

## Revendications

1. Procédé de gestion de l'état et du fonctionnement d'un véhicule automobile comprenant un dispositif de freinage statique (7) pouvant être activé par un élément de commande actionnable manuellement à l'arrêt du véhicule, tel qu'un interrupteur, et un dispositif de freinage dynamique (6), **caractérisé en ce qu'**une action manuelle sur l'élément de commande pendant que le véhicule roule provoque une opération de freinage du véhicule par activation du dispositif de freinage dynamique (6) pour décélérer le véhicule à condition que la pédale d'accélération (2) soit relâchée par le conducteur du véhicule.

2. Procédé selon la revendication 1, **caractérisé en ce qu'**une action manuelle fugitive sur l'élément de commande provoquant l'activation du dispositif de freinage dynamique (6) conduit ce dernier à fournir une pression de freinage du véhicule correspondant à une décélération du véhicule relativement faible, par exemple d'environ 2 m/s².

3. Procédé selon la revendication 1, **caractérisé en ce qu'**une action manuelle prolongée sur l'élément de commande provoquant l'activation du dispositif de freinage dynamique (6) conduit ce dernier à fournir une pression de freinage du véhicule correspondant à une décélération relativement forte du véhicule, par exemple d'environ 6 m/s².

4. Procédé selon la revendication 1 ou 2, **caractérisé en ce que** les deux valeurs de décélération relativement faible et forte peuvent être programmées par le conducteur dans une gamme de valeurs comprises entre 1 m/s² et 10 m/s².

5. Procédé selon l'une des revendications précédentes, **caractérisé en ce que** l'appui sur la pédale d'accélération (2) pendant que le dispositif de freinage dynamique (6) exerce une action de freinage commande l'annulation de cette action de freinage du véhicule.

6. Procédé selon l'une des revendications précédentes, **caractérisé en ce que** l'appui sur la pédale de frein du véhicule à une pression de freinage supérieure à la pression de freinage exercée par le dispositif de freinage dynamique (6) commande l'annulation de l'action de freinage de ce dispositif.

7. Procédé selon l'une des revendications précédentes, **caractérisé en ce qu'**il permet de programmer une priorité à donner entre la pédale d'accélération (2) pour autoriser ou annuler l'opération de freinage par le dispositif de freinage dynamique (6) pendant que le véhicule roule dans des conditions de conduite normale et l'action sur l'élément de commande manuelle pour déclencher une opération de freinage du véhicule par le dispositif de freinage dynamique (6) même en cas d'appui sur la pédale d'accélération (2) pendant que le véhicule roule dans des conditions de conduite accompagnée.

8. Procédé selon l'une des revendications précédentes, **caractérisé en ce que** le dispositif de freinage dynamique (6) agit sur les quatre étriers de freins des roues du véhicule.

9. Procédé selon l'une des revendications 1 à 7, **caractérisé en ce que** le freinage du véhicule peut être programmé pour que le dispositif de freinage dynamique (6) soit activé pendant que le véhicule roule de manière à agir uniquement sur les étriers des roues arrière du véhicule à une pression de freinage permettant de bloquer les roues arrière en réponse à la réalisation d'une condition imposée par le conducteur et consistant, par exemple, à appuyer simultanément sur trois interrupteurs différents accessibles au conducteur.

10. Procédé selon la revendication 9, **caractérisé en ce qu'**il consiste à indiquer le mode de freinage précité par clignotement du témoin lumineux de frein de parking existant dans la planche de bord du véhicule.

11. Procédé selon l'une des revendications 1 à 8, **caractérisé en ce qu'**il consiste à mettre en service le dispositif d'antiblocage des roues du véhicule lors d'une activation du dispositif de freinage dynamique (6) pendant que le véhicule roule sur une route de faible adhérence.

12. Procédé selon l'une des revendications précédentes, **caractérisé en ce qu'**il consiste à allumer les feux de stop arrière du véhicule en cas de freinage du véhicule par le dispositif de freinage dynamique (6).

13. Système de gestion de l'état et du fonctionnement d'un véhicule automobile pour la mise en oeuvre du procédé tel que défini dans l'une des revendications précédentes, **caractérisé en ce qu'**il comprend un dispositif de pilotage (15) des dispositifs de freinage statique (7) et dynamique (6), recevant des informations de différents capteurs (C1,..., Cn) et interrupteurs présents dans le véhicule, tels que l'interrupteur de commande de mise en service du dispositif de freinage statique (7) à l'arrêt du véhicule, ainsi que des pédales d'accélération (2) et de frein du véhicule, le dispositif de pilotage (15) permettant de commander le dispositif de freinage dynamique (6) pour freiner le véhicule dès détection des conditions selon lesquelles l'interrupteur de commande du dispositif de freinage statique (7) a été actionné manuellement et la pédale d'accélération (2) a été relâchée.

14. Système selon la revendication 13, **caractérisé en ce que** le dispositif de freinage statique (7)comprend un moto-réducteur électrique (11) entraînant au moins un câble (12) d'actionnement d'un frein de parking agissant sur les roues arrière du véhicule et le dispositif de freinage dynamique (6) comprend une pompe électro-hydraulique (8), au moins deux récepteurs (9) de frein hydraulique, et des moyens de commande actionnant sélectivement la pompe (8) pour alimenter en liquide de frein sous pression les récepteurs de frein hydraulique (9).

## Claims

1. A method of managing the state and the operation of a motor vehicle including a static braking device (7) which can be activated by a control member that can be actuated manually when the vehicle has stopped, such as a switch, and a dynamic braking device (6), **characterized in that** a manual action on the control member while the vehicle is moving produces a vehicle braking operation by activation of the dynamic braking device (6) in order to decelerate the vehicle provided that the accelerator pedal (2) is released by the vehicle driver.

2. The method according to Claim 1, **characterized in that** a brief manual action on the control member producing activation of the dynamic braking device (6) causes the latter to provide a vehicle braking pressure corresponding to a relatively slight vehicle deceleration, for example approximately 2m/s².

3. The method according to Claim 1, **characterized in that** a prolonged manual action on the control member producing activation of the dynamic braking device (6) causes the latter to provide a vehicle braking pressure corresponding to a relatively strong vehicle deceleration, for example approximately 6m/s².

4. The method according to Claim 1 or 2, **characterized in that** the two values of relatively slight and strong deceleration can be programmed by the driver in a range of values of between 1m/s² and 10m/s².

5. The method according to one of the preceding claims, **characterized in that** pressing on the accelerator pedal (2) while the dynamic braking device (6) exerts a braking action orders the cancellation of this vehicle braking action.

6. The method according to one of the preceding claims, **characterized in that** pressing on the vehicle brake pedal at a braking pressure greater than the braking pressure exerted by the dynamic braking device (6) orders the cancellation of the braking action of this device.

7. The method according to one of the preceding claims, **characterized in that** it allows programming of a priority to be given between the accelerator pedal (2) to authorize or cancel the braking operation by the dynamic braking device (6) while the vehicle is moving in normal driving conditions and the action on the manual control member to trigger a vehicle braking operation by the dynamic braking device (6) even when the accelerator pedal (2) is pressed while the vehicle is moving in accompanied driving conditions.

8. The method according to one of the preceding claims, **characterized in that** the dynamic braking device (6) acts on the four brake calipers of the vehicle wheels.

9. The method according to one of Claims 1-7, **characterized in that** braking of the vehicle can be programmed such that the dynamic braking device (6) is activated while the vehicle is moving in such a way as to act solely on the calipers of the rear wheels of the vehicle at a braking pressure for locking the rear wheels in response to the fulfilment of a condition imposed by the driver and consisting, for example, in pressing simultaneously on three different switches that are accessible to the driver.

10. The method according to Claim 9, **characterized in that** in consists in indicating the aforementioned braking mode by flashing the parking brake warning light that is located on the vehicle dashboard.

11. The method according to one of Claims 1-8, **characterized in that** it consists in implementing the vehicle wheel anti-locking device during activation of the dynamic braking device (6) while the vehicle is moving on a low-grip road.

12. The method according to one of the preceding claims, **characterized in that** it consists it lighting up the vehicle rear stop lights when the vehicle is braked by the dynamic braking device (6).

13. A system for managing the state and the operation of a motor vehicle in order to implement the method as defined in one of the preceding claims, **characterized in that** it includes a device (15) for operating the dynamic (6) and static (7) braking devices, receiving information from various sensors (S1, ..., Sn) and switches that are present in the vehicle, such as the switch for controlling the implementation of the static braking device (7) when the vehicle has stopped, as well as from the vehicle accelerator (2) and brake pedals, the operating device (15) enabling the dynamic braking device (6) to be controlled in order to brake the vehicle upon detection of the conditions according to which the switch for controlling the static braking device (7) has been manually actuated and the accelerator pedal (2) has been released.

14. The system according to Claim 13, **characterized in that** the static braking device (7) includes an electric gear motor (11) driving at least one cable (12) for actuating a parking brake acting on the rear wheels of the vehicle and the dynamic braking device (6) includes an electrohydraulic pump (8), at least two hydraulic brake actuators (9), and control means selectively actuating the pump (8) in order to supply the hydraulic brake actuators (9) with pressurised brake fluid.

## Patentansprüche

1. Verfahren zum Verwalten des Zustands und des Betriebs eines Kraftfahrzeugs, das eine statische Bremsvorrichtung (7), die von einem Bedienelement aktiviert werden kann, das manuell beim Stillstand des Fahrzeugs betätigt werden kann, wie zum Beispiel ein Schalter, und eine dynamische Bremsvorrichtung (6) aufweist, **dadurch gekennzeichnet, dass** die manuelle Einwirkung auf das Bedienelement während des Fahrens des Fahrzeugs eine Bremsoperation des Fahrzeugs durch Aktivieren der dynamischen Bremsvorrichtung (6) bewirkt, um das Fahrzeug zu bremsen, vorausgesetzt, dass das Gaspedal (2) von dem Fahrer des Fahrzeugs freigegeben wird.

2. Verfahren nach Anspruch 1, **dadurch gekennzeichnet, dass** die manuelle flüchtige Einwirkung auf das Bedienelement, die das Aktivieren der dynamischen Bremsvorrichtung (6) auslöst, diese Letztere dazu veranlasst, einen Bremsdruck des Fahrzeugs zu liefern, der einer relativ schwachen Bremsung des Fahrzeugs, zum Beispiel von etwa 2 m/s² entspricht.

3. Verfahren nach Anspruch 1, **dadurch gekennzeichnet, dass** ein längeres manuelles Einwirken auf das Bedienelement, das das Aktivieren der dynamischen Bremsvorrichtung (6) bewirkt, diese Letztere dazu veranlasst, einen Bremsdruck des Fahrzeugs zu liefern, der einer relativ starken Bremsung des Fahrzeugs, zum Beispiel von etwa 6 m/s² entspricht.

4. Verfahren nach Anspruch 1 oder 2, **dadurch gekennzeichnet, dass** der relativ schwache und der relativ starke Bremswert von dem Fahrer in einem Wertebereich zwischen 1 m/s² und 10 m/s² programmiert werden können.

5. Verfahren nach einem der vorhergehenden Ansprüche, **dadurch gekennzeichnet, dass** der Druck auf das Gaspedal (2), während die dynamische Bremsvorrichtung (6) eine Bremsaktion ausübt, das Annullieren dieser Bremsaktion des Fahrzeugs steuert.

6. Verfahren nach einem der vorhergehenden Ansprüche, **dadurch gekennzeichnet, dass** der Druck auf das Bremspedal des Fahrzeugs mit einem Bremsdruck größer als der Bremsdruck, der von der dynamischen Bremsvorrichtung (6) ausgeübt wird, das Annullieren der Bremsaktion dieser Vorrichtung steuert.

7. Verfahren nach einem der vorhergehenden Ansprüche, **dadurch gekennzeichnet, dass** es erlaubt, einen Vorrang zu programmieren, der entweder dem Gaspedal (2) zum Genehmigen oder Annullieren des Bremsvorgangs durch die dynamische Bremsvorrichtung (6) während des Fahrens des Fahrzeugs unter normalen Fahrbedingungen, oder dem Einwirken auf das manuelle Bedienelement zum Auslösen einer Bremsoperation des Fahrzeugs durch die dynamische Bremsvorrichtung (6) auch in dem Fall des Drucks auf das Gaspedal (2), während das Fahrzeug unter Übungsfahrtbedingungen fährt, gegeben wird.

8. Verfahren nach einem der vorhergehenden Ansprüche, **dadurch gekennzeichnet, dass** die dynamische Bremsvorrichtung (6) auf die vier Bremssattel der Räder des Fahrzeugs einwirkt.

9. Verfahren nach einem der Ansprüche 1 bis 7, **dadurch gekennzeichnet, dass** das Bremsen des Fahrzeugs programmiert werden kann, so dass die dynamische Bremsvorrichtung (6) aktiviert wird, während das Fahrzeug fährt, um nur auf die Sattel der Hinterräder des Fahrzeugs mit einem Bremsdruck einzuwirken, der es erlaubt, die Hinterräder als Reaktion auf das Eintreten einer Bedingung zu blockieren, die von dem Fahrer auferlegt wird, und die zum Beispiel darin besteht, gleichzeitig auf drei unterschiedliche, für den Fahrer zugängliche Schalter zu drücken.

10. Verfahren nach Anspruch 9, **dadurch gekennzeichnet, dass** es darin besteht, den oben genannten Bremsmodus durch Blinken der Feststellbremsenanzeigelampe, die auf dem Armaturenbrett des Fahrzeugs existiert, anzuzeigen.

11. Verfahren nach einem der Ansprüche 1 bis 8, **dadurch gekennzeichnet, dass** es darin besteht, das Antiblockiersystem der Räder des Fahrzeugs bei einem Aktivieren der dynamischen Bremsvorrichtung (6), während das Fahrzeug auf einer Straße mit geringer Haftung fährt, in Betrieb zu setzen.

12. Verfahren nach einem der vorhergehenden Ansprüche, **dadurch gekennzeichnet, dass** es darin besteht, die Heckbremsleuchten des Fahrzeugs im Fall eines Bremsens des Fahrzeugs durch die dynamische Bremsvorrichtung (6) einzuschalten.

13. System zum Verwalten des Zustands und des Betriebs eines Kraftfahrzeugs zum Umsetzen des in einem der vorhergehenden Ansprüche definierten Verfahrens, **dadurch gekennzeichnet, dass** es eine Steuervorrichtung (15) der statischen Bremsvorrichtung (7) und der dynamischen Bremsvorrichtung (6) aufweist, die Informationen von unterschiedlichen Sensoren (C1, ..., Cn) und Schaltern empfängt, die in dem Fahrzeug vorhanden sind, wie zum Beispiel von dem Bedienschalter zum Einschalten der statischen Bremsvorrichtung (7) beim Stillstand des Fahrzeugs, sowie von dem Gaspedal (2) und dem Bremspedal des Fahrzeugs, wobei die Steuervorrichtung (15) es erlaubt, die dynamische Bremsvorrichtung (6) zu steuern, um das Fahrzeug ab dem Erfassen der Bedingungen zu bremsen, gemäß welchen der Bedienschalter der statischen Bremsvorrichtung (7) manuell betätigt und das Gaspedal (2) freigegeben wurde.

14. System nach Anspruch 13, **dadurch gekennzeichnet, dass** die statische Bremsvorrichtung (7) einen elektrischen Untersetzungsgetriebemotor (11) aufweist, der mindestens ein Kabel (12) zum Betätigen einer Feststellbremse antreibt, die auf die Hinterräder des Fahrzeugs einwirkt, und wobei die dynamische Bremsvorrichtung (6) eine elektrohydraulische Pumpe (8), mindestens zwei Empfänger (9) für hydraulische Bremse sowie Bedienmittel aufweist, die selektiv die Pumpe (8) betätigen, um die Empfänger für hydraulische Bremse (9) mit Bremsflüssigkeit unter Druck zu versorgen.
